# EUROPÄISCHE PATENTSCHRIFT

(11) **EP 1 177 369 B1**
(45) Veröffentlichungstag und Bekanntmachung des Hinweises auf die Patenterteilung: **22.11.2006**
(21) Anmeldenummer: 00929526.2
(22) Anmeldetag: 12.05.2000
(51) Int. Cl.: F01N 3/08, F02D 41/02

(54) **ABGASREINIGUNGSVERFAHREN UND ABGASREINIGUNGSVORRICHTUNG MIT NO x?-SPEICHERKATALYSATOR UND VORKATALYSATOR**
EXHAUST GAS PURIFYING METHOD AND EXHAUST GAS PURIFYING DEVICE WITH AN NO x?-STORAGE CATALYST AND A PRECATALYST
PROCEDE D'EPURATION DE GAZ D'ECHAPPEMENT ET DISPOSITIF D'EPURATION DOTE D'UN CATALYSEUR DE STOCKAGE DE NO x? ET D'UN PRECATALYSEUR

(30) Priorität: 12.05.1999 DE 19921971
(43) Veröffentlichungstag der Anmeldung: 06.02.2002
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Pohlmann, Bernd Michael
(86) Internationale Anmeldenummer: PCT/EP2000/004298
(87) Internationale Veröffentlichungsnummer: WO 2000/070204

(56) Entgegenhaltungen:
- EP-A- 0 893 154
- WO-A-98/27322
- DE-A- 19 636 041
- US-A- 5 649 421

## Beschreibung

Die vorliegende Erfindung betrifft ein Abgasreinigungsverfahren und eine Abgasreinigungsvorrichtung für eine magerlauffähige Brennkraftmaschine, mit einem NOₓ-Speicherkatalysator und einem Vorkatalysator. Die Erfindung betrifft zudem ein De-Sulfatierungsverfahren für eine solche Abgasreinigungsvorrichtung gemäß dem Oberbegriff des Anspruchs 12.

Der NOₓ-Speicherkatalysator dient hierbei bei magerer Betriebsweise zur Speicherung der im Abgas enthaltenen Stickoxide, die bei intermittierenden Katalysatorregenerationen unter reduzierenden Bedingungen im fetten Abgas in unschädlichen Stickstoff umgewandelt werden. Hierbei wird der NOₓ-Speicherkatalysator gezielt entleert, damit er seine volle Absorptionsfähigkeit für Stickoxide zurückerhält, die mit zunehmender Stickoxidbeladung in der Magerphase kontinuierlich abnimmt. Durch den im Kraftstoff enthaltenen Schwefel werden jedoch an den katalytisch wirksamen Oberflächen stets auch stabile Sulfate gebildet, die zu einer schleichenden Vergiftung des Katalysators führen und dessen NOₓ-Einlagerungsfähigkeit allmählich verringern. Zur Gewährleistung einer stets ordnungsgemäßen Abgasreinigung wird daher in der Praxis durch Einstellung einer ausreichend hohen Katalysatortemperatur von mehr als etwa 550 °C und Absenkung des Sauerstoffgehaltes im Abgas bei hinreichend hohem Schadstoffgehalt in periodischen Abständen eine Entschwefelung oder De-Sulfatierung des NOₓ-Speicherkatalysators durchgeführt.

Der Vorkatalysator erhöht das Abgastemperatumiveau und bewirkt eine günstige Abgaszusammensetzung. Er sorgt für ein frühzeitiges Anspringen der Abgasreinigungsvorrichtung und unterstützt die .am NOₓ-Speicherkatalysator ablaufenden Sorptionsprozesse durch Begünstigung der Oxidation von NO zu NO₂. Ferner bildet er einen Puffer gegen kurzzeitige Abgastemperaturspitzen, die den hochtemperaturempfindlichen NOₓ-Speicherkatalysator schädigen könnten.

Üblicherweise wird unter Vorhaltung einer gewissen Reserve zur Kompensation von Alterungseffekten ein Katalysatorvolumen von 50 - 100 % des Motorhubraums, insbesondere von 55 - 70 % des Motorhubraums gewählt.

Bei selbstzündenden Brennkraftmaschinen oder Dieselmotoren dient der Vorkatalysator insbesondere zur Oxidation von NO zu NO₂, um bei Temperaturen von weniger als etwa 180°C die Physisorption von NO an den Speicherkomponenten und am Edelstahl des nachgeschalteten NOₓ-Speicherkatalysators und die Bildung eines die NO₂-Aufnahme blockierenden "NO-Filme" abzuschwächen oder zu verhindern, der insbesondere bei hohen Raumgeschwindigkeiten die Chemisorption (Absorption) von NO₂ spürbar verringert und zu einer entsprechenden Abnahme der NOₓ(NO₂)-Speicherfähigkeit führt.

Als NO/NO₂-Oxidationsvorkatalysatoren oder NO/NO₂-Konverter werden üblicherweise Pt-only Katalysatoren verwendet, da diese die erforderlichen guten Oxidationseigenschaften ab etwa 180°C besitzen. Eine Beimischung von Pd und/oder Rhodium würde eine deutliche Verschiebung des Lightoffs für die NO-Oxidation nach oben bis zu Temperaturen von mehr als etwa 300°C in einen für Dieselmotoren uninteressanten Temperaturbereich bewirken. Eine Beimengung dieser Substanzen ist bei Dieselkatalysatoren jedoch auch nicht erforderlich, da keine 3-Wege-Reaktion nötig ist und die HC-Oxidation auch an reinem Pt gut abläuft. Zudem ist auch das Problem der erforderlichen Hochtemperaturfestigkeit nicht so dramatisch (max. etwa 750°C bei Dieselbrennkraftmaschinen).

Aus der DE 196 36 041 A1 ist die Verwendung eines entsprechenden NO/NO₂₋Konverters mit einer Platinbeladung von vorzugsweise ≥ 3,66 g/cm³ (60 g/ft³) bekannt, dessen Gesamtvolumen im Unterschied zu den üblicherweise bei Dieselbrennkraftmaschinen im Abgasstrom eingesetzten Oxidationskatalysatoren lediglich 10 - 25 %, insbesondere jedoch 15 - 20 %, des Hubraums der zugeordneten selbstzündenden Brennkraftmaschine beträgt, da sich bei diesem Verhältnis optimale NOₓ-Reinigungswerte erzielen lassen. Dies gilt insbesondere für direkteinspritzende Dieselmaschinen mit ihren spezifischen Abgastemperaturen. Eine De-Sulfatierung des zugeordneten NOₓ-Speichers wird in dem genannten Dokument nicht angesprochen, sollte sie jedoch durch Zugabe von Kraftstoffbestandteilen in das Abgas vor dem beschriebenen kleinen Vorkatalysator erfolgen, ist auf Grund der Kleinheit des Vorkatalysators mit einem frühen Verlust von dessen katalytischer Wirkung durch thermische Alterung zu rechnen.

Die Verwendung eines solchen Platinkonverters ist nur bei selbstzündenden Brennkraftmaschinen sinnvoll, da Dieselmotoren auch während der Warmlaufphase mager betrieben werden, so daß der NOₓ-Anteil nicht genügend reduziert werden kann. Bei fremdgezündeten Brennkraftmaschinen oder Ottomotoren, insbesondere DI-Ottomotoren, ist eine solcher vorgeschalteter Oxidationskatalysator nicht erforderlich, da sich der NOₓ-Speicherkatalysator nicht nur sehr viel schneller als beim Dieselmotor auf Betriebstemperaturen von mehr als etwa 250°C aufheizt und entsprechend frühzeitig katalytisch aktiv ist sondern auch anschließend in diesem Temperaturbereich verbleibt. Die Start- oder Warmlaufphase wird überdies im Lambda = 1-Betrieb abgewickelt, wobei ein großer Vorkatalysator bereits den Löwenanteil des im Abgas vorhandenen NOₓ umsetzt und nur ein geringer NOₓ-Durchbruch wegen Lambda = 1 erfolgt, der nicht in den Speicherkatalysator eingelagert wird, da es an O₂ für die Absorption fehlt. Der Übergang in den Magerbetrieb erfolgt erst bei einer Speicherkatalysatortemperatur von etwa 250°C mit einer ausreichend hohen katalytischen Aktivität und einem entsprechend schnellen Ablauf der Sorptionsreaktionen. Der Vorkatalysator dient bei Ottomotoren im wesentlichen dem schnellen Lightoff für HC und CO nach einem Kaltstart im Homogenbetrieb des Motors mit Lambda < 1,05, da im Vergleich zu einem Dieselmotor sehr viel höhere HC- und CO-Rohemissionen auftreten, die einen schnellen Lightoff zwingend erforderlich machen.

Die während der Warmlaufphase von Ottomotoren vermehrt auftretenden HC- und CO-Rohemissionen werden, wie beispielsweise aus der WO 98 27322 A bekannt ist, durch Verwendung eines großvolumigen Dreiwege-Vorkatalysators umgesetzt, wobei gleichzeitig NOₓ reduziert wird (EP 0 560 981 A). Hierdurch läßt sich auch während der Warmlaufphase eine NOₓ-Reduktion im Abgas erreichen, obwohl der NOₓ-Speicher noch nicht die für eine NOₓ-Speicherung erforderliche Betriebstemperatur erreicht hat.

Die Aufgabe der vorliegenden Erfindung besteht in der Schaffung einer gattungsgemäßen Abgasreinigungsvorrichtung für fremdgezündete Brennkraftmaschinen mit einer günstigeren Abgaszusammensetzung bei der Durchführung einer De-Sulfatierung, so daß sich kürzere De-Sulfatierungszeiten und ein geringerer Kraftstoffmehrverbrauch für Katalysator-Aufheizmaßnahmen ergeben. Die gesuchte Abgasreinigungsvorrichtung soll zudem durch eine bessere Hochtemperaturbeständigkeit und Alterungsstabilität gekennzeichnet sein. Die Aufgabe besteht auch in der Schaffung eines verbesserten Abgasreinigungsverfahrens durch Verwendung einer Abgasreinigungsvorrichtung der gesuchten Art und in der Schaffung eines verbesserten De-Sulfatierungsverfahren zur periodischen Regeneration einer gattungsgemäßen Abgasreinigungsvorrichtung.

Diese Aufgabe wird bei einer Abgasreinigungsvorrichtung der genannten Art erfindungsgemäß dadurch gelöst, daß das Vorkatalysatorvolumen weniger als 40 % des Hubraums der zugeordneten Brennkraftmaschine beträgt, wobei sich der Bereich zwischen 15 und 35 %, insbesondere jedoch der Bereich zwischen 20 und 30 %, als besonders günstig erweist. Das Gesamtvolumen des Vorkatalysators und des NOₓ₋Speicherkatalysators beträgt hierbei vorzugsweise etwa 70 - 200 % des Hubraums der Brennkraftmaschine. Der Vorkatalysator umfaßt insbesondere einen Dreiwegekatalysator, der vorzugsweise einen Rhodiumgehalt ungefähr > 0,122 g/cm³(2 g/ft³) besitzt. Die NO/NO₂-Konvertierungsrate ist bei Katalysatortemperaturen zwischen etwa 300°C und 350°C < 50 %, insbesondere < 20 %. Die NO-Konzentrationen im Abgas stromauf des Vorkatalysators betragen hierbei etwa 300 - 800 ppm bei einem Abgasmassenstrom von etwa 25 - 90 kg/h. Bei einem bevorzugten Ausführungsbeispiel besitzt der NOₓ-Speicherkatalysator eine NOₓ-Speicherfähigkeit von mehr als etwa 10 mmol NO₂/Liter Katalysatorvolumen.

Die erfindungsgemäße Abgasreinigungsvorrichtung ist insbesondere zur Abgasreinigung bei fremdgezündeten Brennkraftmaschinen oder Ottomotoren geeignet. Die im Abgas einer entsprechenden Brennkraftmaschine enthaltenden Stickoxide werden hierbei bei magerer Betriebsweise in dem NOₓ-Speicherkatalysator gespeichert und bei intermittierenden Katalysatorregenerationen oder De-Sulfatierungen unter reduzierenden Bedingungen im fetten Abgas in unschädlichen Stickstoff umgewandelt. Das Abgasreinigungsverfahren umfaßt hierbei insbesondere ein 3-Wege-Reaktion in dem Vorkatalysator. Diese 3-Wege-Reaktion bewirkt oberhalb einer Katalysatortemperatur von etwa 250°C, insbesondere etwa 300°C, in einem Lambdabereich zwischen etwa 0,998 und 1,002 bei einer Raumgeschwindigkeit am Vorkatalysator < 100000 h⁻¹ eine HC-, CO- und NOₓ-Umsatzrate > 30 %.

Der Vorkatalysator wird entsprechend den obigen Angaben erfindungsgemäß bezüglich seiner Abmessungen und seiner Beschichtung insbesondere so ausgelegt oder bemessen, daß ein bestimmter Reduktionsmittelschlupf, insbesondere CO und H₂, auftritt, durch den die erforderlichen intermittierenden De-Sulfatierungsvorgänge an dem nachgeschalteten NOₓ-Speicherkatalysator im Vergleich zu einem herkömmlichen großvolumigen Vorkatalysator ohne einen entsprechenden Reduktionsmittelschlupf begünstigt werden. Bei diesen De-Sulfatierungsvorgängen wird der NOₓ₋Speicherkatalysator durch Einstellung einer ausreichend hohen De-Sulfatierungstemperatur im Katalysator von mehr als etwa 550°C, vorzugsweise mehr als etwa 600 - 650°C, und Absenkung des Sauerstoffgehalts im Abgas der Brennkraftmaschine bei hinreichend hohem Schadstoffgehalt in periodischen Abständen regeneriert. Der NOₓ-Speicherkatalysator wird hierbei vorzugsweise durch den Motorwirkungsgrad mindernde Maßnahmen, insbesondere mittels einer Spätzündung, auf die De-Sulfatierungstemperatur aufgeheizt. Diese Wirkungsgradminderung verursacht einen Kraftstoff-Mehrverbrauch, der zum Einhalten des gewünschten Abgas-Lambdawertes einen proportional höheren Luftmassenstrom und somit auch einen höheren Abgasmassenstrom erforderlich macht. Der kleine Vorkatalysator wird daher mit höherer Raumgeschwindigkeit beaufschlagt, was zu höheren Reduktionsmitteldurchbrüchen führt. Diese Reduktionsmitteldurchbrüche werden erst auf dem NOₓ-Speicherkatalysator umgesetzt, so daß die Temperaturverluste über das Vorrohr zwischen dem Vorkatalysator und dem NOₓ-Speicherkatalysator insgesamt geringer ausfallen.

Durch die erfindungsgemäße Verwendung eines im Vergleich zum Stand der Technik merklich kleineren Vorkatalysators läßt sich auch beim Light-Off noch eine gute Schadstoffzusammensetzung erreichen. Das Anspring- und Aufheizverhalten der Abgasreinigungsvorrichtung wird durch den geringeren Energiebedarf zur Eigenerwärmung des Vorkatalysators spürbar verbessert, so daß sich kürzere De-Sulfatierungszeiten ergeben und der Kraftstoffmehrverbrauch durch Katalysator-Aufheizmaßnahmen entsprechend sinkt. Da bei einem kleineren Vorkatalysator ein teilweises Überlaufen früher eintritt als bei großen Vorkatalysatoren, ist auch seine Hochtemperaturalterung geringer ausgeprägt, so daß die Alterungsstabilität entsprechend zunimmt. Zusätzlich hierzu bietet ein kleinerer Vorkatalysator aufgrund seines geringeren Platzbedarfs auch mehr Möglichkeiten zu einer motornahen Anordnung und damit zu einer früheren effizienten und besseren Schadstoffkonvertierung.

Weitere Einzelheiten, Vorteile und Merkmale der vorliegenden Erfindung ergeben sich nicht nur aus den zugehörigen Ansprüchen - für sich und/oder in Kombination - sondern auch aus der nachfolgenden Beschreibung eines bevorzugten Ausführungsbeispiels in Verbindung mit den zugehörigen Zeichnungen. In den Zeichnungen zeigen in schematischer Darstellung:
- Fig. 1: eine Abgasreinigungsvorrichtung nach dem Stand der Technik; und
- Fig. 2: eine erfindungsgemäße Abgasreinigungsvorrichtung.

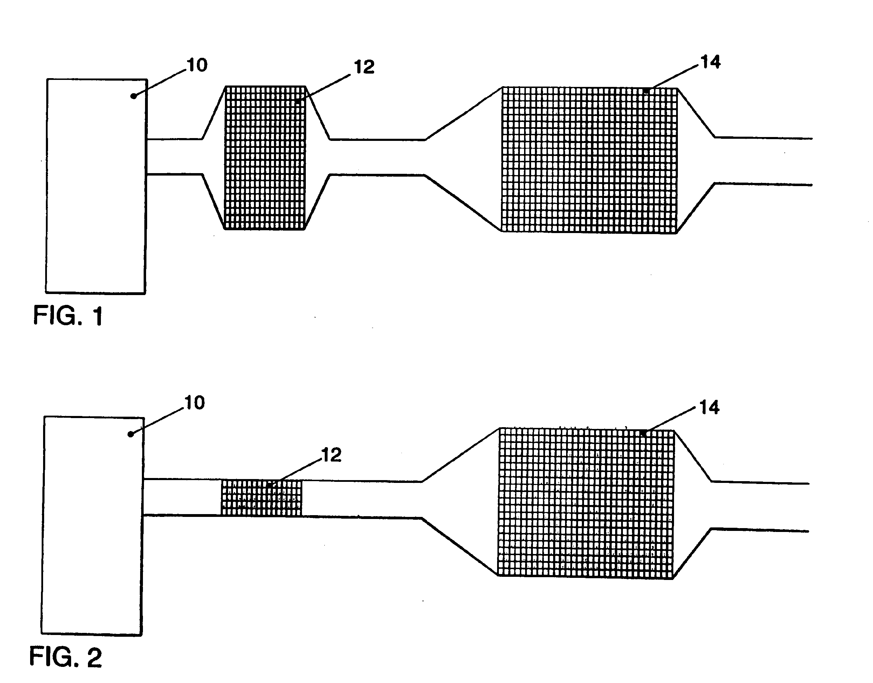

Fig. 1 zeigt eine magerlauffähige Brennkraftmaschine oder einen Motor (10) mit einer nachgeschalteten herkömmlichen Abgasreinigungsvorrichtung (12, 14), die einen motornahen großvolumigen Vorkatalysator (12) und einen stromab angeordneten NOₓ₋Speicherkatalysator (14) umfaßt. Das Vorkatalysatorvolumen beträgt etwa 55 - 70 % des Motorhubraums, so daß ein recht großer Energiebedarf zur Eigenerwärmung des Vorkatalysators (12) erforderlich ist und die Aufheizung des nachgeschalteten NOₓ₋Speicherkatalysators (14) auf die erforderlichen hohen De-Sulfatierungstemperaturen von mehr als etwa 550 °C, insbesondere jedoch mehr als etwa 600 - 650 °C, entsprechend verzögert wird. Die dargestellte Abgasreinigungsvorrichtung ist somit durch ein recht ungünstiges Anspring- und Aufheizverhalten gekennzeichnet.

Während der Durchführung einer De-Sulfatierung wird im hauptsächlich genutzten Lambda-Bereich zwischen 0,95 und 1,00 auf dem großvolumigen Vorkatalysator (12) nahezu der gesamte Schadstoffausstoß der Brennkraftmaschine (10) umgesetzt. Insbesondere betrifft dies die schnell ablaufenden Oxidationsreaktionen bei CO und H₂. Dies sind jedoch die Hauptreduktionsmittel für eine schnelle Entschwefelung auch bei niedrigen Temperaturen, so daß relativ lange De-Sulfatierungszeiten und ein recht hoher Kraftstoffverbrauch zur Erzeugung der benötigten höheren De-Sulfatierungstemperaturen im NOₓ-Speicherkatalysator (14) erforderlich sind.

Bei der in Fig. 2 dargestellten erfindungsgemäßen Abgasreinigungsvorrichtung (12, 14) beträgt das Vorkatalysatorvolumen lediglich etwa 20 - 30 % des Motorhubraums, so daß die Aufheizung des NOₓ-Speicherkatalysators (14) durch den entsprechend geringeren Energiebedarf zur Eigenerwärmung beschleunigt wird und der Kraftstoffmehrverbrauch für Katalysator-Heizmaßnahmen sinkt. Bei dem kleineren Vorkatalysator (12) tritt zudem ein gewisser Reduktionsmittelschlupf auf, so daß der NOₓ-Speicherkatalysator (14) mit einer für die De-Sulfatierung günstigeren Abgaszusammensetzung versorgt wird. Dies führt nicht nur zu kürzeren De-Sulfatierungszeiten, sondern ermöglicht auch die Verwendung niedrigerer De-Sulfatierungstemperaturen mit einem entsprechend geringeren Kraftstoffverbrauch. Daneben tritt aber auch ein geringerer Kraftstoffmehrverbrauch als Folge der teilweisen Verlagerung der Schadstoffumsätze vom Vorkatalysator (12) auf den NOₓ-Speicherkatalysator (14) auf, so daß im Vorrohr geringere thermische Verluste zu verzeichnen sind. Da ein teilweises Überlaufen des Vorkatalysators (12) früher eintritt als bei dem größeren Vorkatalysator (12) nach dem Stand der Technik gemäß Fig. 1 ist zudem auch seine Hochtemperaturalterung geringer ausgeprägt, so daß die Alterungsstabilität entsprechend zunimmt. Zusätzlich hierzu bietet der kleine Vorkatalysator (12) aufgrund des geringeren Platzbedarfs mehr Möglichkeiten einer motornahen Anordnung, die zu einer weiteren Verbesserung der Schadstoffkonvertierung führt.

## Patentansprüche

1. Abgasreinigungsvorrichtung für eine fremdgezündete magerlauffähige Brennkraftmaschine (10), umfassend einen NOₓ-Speicherkatalysator (14) mit Vorkatalysator (12), wobei die im Abgas der Brennkraftmaschine (10) enthaltenen Stickoxide bei magerer Betriebsweise in dem NOₓ-Speicherkatalysator (14) speicherbar und bei intermittierenden Katalysatorregenerationen oder De-Sulfatierungen unter reduzierenden Bedingungen im fetten Abgas in unschädlichen Stickstoff umwandelbar sind, **dadurch gekennzeichnet, dass** zur Erhöhung des Reduktionsmittelschlupf für intermittierende Katalysatorregeneration oder De-Sulfatierungsvorgänge das Vorkatalysatorvolumen weniger als 40 % des Hubraums der Brennkraftmaschine (10) beträgt.

2. Abgasreinigungsvorrichtung nach Anspruch 1, **dadurch gekennzeichnet, dass** das Vorkatalysatorvolumen 15 - 35 % des Hubraums der Brennkraftmaschine (10) beträgt.

3. Abgasreinigungsvorrichtung nach Anspruch 2, **dadurch gekennzeichnet, dass** das Vorkatalysatorvolumen 20 - 30 % des Hubraums der Brennkraftmaschine (10) beträgt.

4. Abgasreinigungsvorrichtung nach einem der vorhergehenden Ansprüche, **dadurch gekennzeichnet, dass** das Gesamtvolumen des Vorkatalysators (12) und des NOₓ-Speicherkatalysators (14) 70 - 200 % des Hubraums der Brennkraftmaschine (10) beträgt.

5. Abgasreinigungsvorrichtung nach einem der vorhergehenden Asnprüche, **dadurch gekennzeichnet, dass** der Vorkatalysator (12) einen Dreiwegekatalysator umfaßt.

6. Abgasreinigungsvorrichtung nach Anspruch 5, **dadurch gekennzeichnet, dass** der Dreiwegekatalysator einen Rhodiumgehalt ≥ 0,122 g/cm³ besitzt.

7. Abgasreinigungsvorrichtung nach einem der vorhergehenden Ansprüche, **dadurch gekennzeichnet, dass** die NOₓ-Speicherfähigkeit des NOₓ-Speicherkatalysators (14) ≥ 10 mmol NO₂ pro Liter Katalysatorvolumen beträgt.

8. Abgasreinigungsverfahren für eine fremdgezündete magerlauffähige Brennkraftmaschine (10), bei dem die im Abgas der Brennkraftmaschine (10) enthaltenen Stickoxide bei magerer Betriebsweise in dem NOₓ-Speicherkatalysator (14) einer nachgeschalteten Abgasreinigungsvorrichtung (12, 14) gespeichert und bei intermittierenden Katalysatorregenerationen unter reduzierenden Bedingungen im fetten Abgas in unschädlichen Stickstoff umgewandelt werden, **dadurch gekennzeichnet, dass** zur Erhöhung des Reduktionnmittelschlupf für intermittierende Katalysatorregeneration oder De-Sulfatierungsvorgänge die Abgasreinigungsvorrichtung (12,14) die Merkmale zumindest eines der vorhergehenden Ansprüche aufweist.

9. Abgasreinigungsverfahren nach Anspruch 8, **dadurch gekennzeichnet, dass** die Abgasreinigung eine 3-Wege-Reaktion in dem Vorkatalysator (12) der Abgasreinigungsvorrichtung (12, 14) umfaßt.

10. Abgasreinigungsverfahren nach Anspruch 9, **dadurch gekennzeichnet, dass** die 3-Wege-Reaktion in dem Vorkatalysator (12) oberhalb einer Katalysatortemperatur von 250 - 350°C in einem Lambdabereich zwischen 0,998 und 1,002 bei einer Raumgeschwindigkeit am Vorkatalysator (12) < 100000 h⁻¹ eine HC-, CO- und NOₓ-Umsatzrate > 30 % bewirkt.

11. Abgasreinigungsverfahren nach zumindest einem der Ansprüche 8 bis 10, **dadurch gekennzeichnet, dass** der Vorkatalysator (12) zur Erhöhung des Reduktionsmittelschlupf bei intermittierender Katalysatorregeneration oder De-Sulfatierungsvorgängen so ausgelegt ist, wie bei der Abgasreinigungsvorrichtung (12, 14) nach den Merkmalen von zumindest einem der Ansprüche 1 bis 7.

12. Abgasreinigungsverfahren nach Anspruch 11, **dadurch gekennzeichnet, dass** eine De-Sulfatierungstemperatur von mehr als 600 - 650°C eingestellt wird.

13. Abgasreinigungsverfahren nach einem der Ansprüche 11 bis 12, **dadurch gekennzeichnet, dass** durch die Absenkung des Sauerstoffgehalts während der De-Sulfatierung ein Lambdawert zwischen 0,95 und 1,0 eingestellt wird.

14. Abgasreinigungsverfahren nach einem der Ansprüche 11 bis 13, **dadurch gekennzeichnet, dass** der NOₓ-Speicherkatalysator (14) durch den Motorwirkungsgrad mindernde Maßnahmen, insbesondere mittels Spätzündung, auf die De-Sulfatierungstemperatur aufgeheizt wird.

## Claims

1. Exhaust-gas purification device for a spark-ignition lean-running internal combustion engine (10), comprising an NOₓ storage catalyst (14) with a precatalyst (12), in which device the nitrogen oxides contained in the exhaust gas of the internal combustion engine (10) can be stored in the NOₓ storage catalyst (14) during lean operation and in the rich exhaust gas can be converted into harmless nitrogen under reducing conditions during intermittent catalyst regenerations or desulphations, **characterized in that**, to increase the reducing-agent slip for intermittent catalyst regeneration or desulphation processes, the precatalyst volume amounts to less than 40% of the piston-swept volume of the internal combustion engine (10).

2. Exhaust-gas purification device according to Claim 1, **characterized in that** the precatalyst volume amounts to 15 - 35% of the piston-swept volume of the internal combustion engine (10).

3. Exhaust-gas purification device according to Claim 2, **characterized in that** the precatalyst volume amounts to 20 - 30% of the piston-swept volume of the internal combustion engine (10).

4. Exhaust-gas purification device according to one of the preceding claims, **characterized in that** the overall volume of the precatalyst (12) and of the NOₓ storage catalyst (14) amounts to 70 - 200% of the piston-swept volume of the internal combustion engine (10).

5. Exhaust-gas purification device according to one of the preceding claims, **characterized in that** the precatalyst (12) comprises a three-way catalyst.

6. Exhaust-gas purification device according to Claim 5, **characterized in that** the three-way catalyst possesses a rhodium content of ≥ 0.122 g/cm³.

7. Exhaust-gas purification device according to one of the preceding claims, **characterized in that** the NOₓ storage capacity of the NOₓ storage catalyst (14) amounts to ≥ 10 mmol of NO₂ per litre of catalyst volume.

8. Exhaust-gas purification method for a spark-ignition lean-running internal combustion engine (10), in which the nitrogen oxides contained in the exhaust gas of the internal combustion engine (10) are stored in the NOₓ storage catalyst (14) of a following exhaust-gas purification device (12, 14) during lean operation and in the rich exhaust gas are converted into harmless nitrogen under reducing conditions during intermittent catalyst regenerations, **characterized in that**, to increase the reducing-agent slip for intermittent catalyst regeneration or desulphation processes, the exhaust-gas purification device (12, 14) has the features of at least one of the preceding claims.

9. Exhaust-gas purification method according to Claim 8, **characterized in that** the exhaust-gas purification comprises a 3-way reaction in the precatalyst (12) of the exhaust-gas purification device (12, 14).

10. Exhaust-gas purification method according to Claim 9, **characterized in that** the 3-way reaction in the precatalyst (12) above a catalyst temperature of 250 - 350°C, in a lambda range of between 0.998 and 1.002, gives rise, in the case of a space velocity at the precatalyst (12) of < 100 000 h⁻¹, to an HC, CO and NOₓ conversion rate of > 30%.

11. Exhaust-gas purification method according to at least one of Claims 8 to 10, **characterized in that**, to increase the reducing-agent slip in the case of intermittent catalyst regeneration or desulphation processes, the precatalyst (12) is designed as in the exhaust-gas purification device (12, 14) according to the features of at least one of Claims 1 to 7.

12. Exhaust-gas purification method according to Claim 11, **characterized in that** a desulphation temperature of more than 600 - 650°C is set.

13. Exhaust-gas purification method according to either one of Claims 11 and 12, **characterized in that** a lambda value of between 0.95 and 1.0 is set by the oxygen content being lowered during desulphation.

14. Exhaust-gas purification method according to one of Claims 11 to 13, **characterized in that** the NOₓ storage catalyst (14) is heated up to the desulphation temperature by means of measures reducing the engine efficiency, in particular by means of retarded ignition.

## Revendications

1. Dispositif de purification des gaz d'échappement pour un moteur à combustion interne (10), capable de fonctionner en régime maigre, à allumage par étincelles, comprenant un catalyseur accumulateur de NOₓ (14) à catalyseur préalable (12), les oxydes d'azote contenus dans le gaz d'échappement du moteur à combustion interne (10) pouvant être stockés, en cas de fonctionnement à régime maigre, dans le catalyseur accumulateur de NOₓ (14) et pouvant être convertis en azote inoffensif dans le gaz d'échappement riche sous des conditions réductrices lors de régénérations du catalyseur ou de désulfatations intermittentes, **caractérisé en ce que**, en vue de l'augmentation du glissement de l'agent de réduction, pour des procédures de régénération du catalyseur ou des désulfatations intermittentes, le volume du catalyseur préalable est de moins de 40% de la cylindrée du moteur à combustion interne (10).

2. Dispositif de purification des gaz d'échappement selon la revendication 1, **caractérisé en ce que** le volume du catalyseur préalable est de 15 - 35% de la cylindrée du moteur à combustion interne (10).

3. Dispositif de purification des gaz d'échappement selon la revendication 2, **caractérisé en ce que** le volume du catalyseur préalable est de 20 - 30% de la cylindrée du moteur à combustion interne (10).

4. Dispositif de purification des gaz d'échappement selon l'une quelconque des revendications précédentes, **caractérisé en ce que** le volume total du catalyseur préalable (12) et du catalyseur accumulateur de NOₓ (14) est de 70 - 200% de la cylindrée du moteur à combustion interne (10).

5. Dispositif de purification des gaz d'échappement selon l'une quelconque des revendications précédentes, **caractérisé en ce que** le catalyseur préalable (12) comprend un catalyseur à trois voies.

6. Dispositif de purification des gaz d'échappement selon la revendication 5, **caractérisé en ce que** le catalyseur à trois voies possède une teneur en rhodium ≥ 0,122 g/cm³.

7. Dispositif de purification des gaz d'échappement selon l'une quelconque des revendications précédentes, **caractérisé en ce que** la capacité de stockage de NOₓ du catalyseur accumulateur de NOₓ (14) est de ≥ 10 mmoles de NO₂ par litre de volume du catalyseur.

8. Procédé de purification de gaz d'échappement pour un moteur à combustion interne (10), capable de fonctionner en régime maigre, à allumage par étincelles, lors duquel les oxydes d'azote contenus dans le gaz d'échappement du moteur à combustion interne (10) sont stockés, en cas de fonctionnement à régime maigre, dans le catalyseur accumulateur de NOₓ (14) d'un dispositif de purification des gaz d'échappement (12, 14), intercalé à la suite et sont convertis en azote inoffensif dans le gaz d'échappement riche sous des conditions réductrices lors de régénérations intermittentes du catalyseur, **caractérisé en ce que**, en vue de la réduction du glissement de l'agent de réduction pour les procédures de régénération de catalyseur ou de désulfatation intermittentes, le dispositif de purification des gaz d'échappement (12, 14) présente les caractéristiques de tout au moins l'une des revendications précédentes.

9. Dispositif de purification des gaz d'échappement selon la revendication 8, **caractérisé en ce que** la purification du gaz d'échappement comprend une réaction à 3 voies dans le catalyseur préalable (12) du dispositif de purification des gaz d'échappement (12, 14).

10. Dispositif de purification des gaz d'échappement selon la revendication 9, **caractérisé en ce que** la réaction à 3 voies dans le catalyseur préalable (12) a pour effet un taux de conversion HC, CO et NOₓ > 30% pour une vitesse spatiale au catalyseur préalable (12) < 100000 heure⁻¹, au dessus d'une température de catalyseur de 250 - 300 °C, dans une domaine lambda compris entre 0,998 et 1,002.

11. Dispositif de purification des gaz d'échappement selon l'une quelconque des revendications 8 à 10, **caractérisé en ce que** le catalyseur préalable (12), en vue de l'augmentation du glissement de l'agent de réduction lors de procédures de régénération du catalyseur ou de désulfatation, est constitué, comme dans le cas du dispositif de purification des gaz d'échappement (12, 14), conformément aux caractéristiques d'au moins une des revendications 1 à 7.

12. Dispositif de purification des gaz d'échappement selon la revendication 11, **caractérisé en ce que** l'on règle une température de désulfatation de plus de 600 - 650 °C.

13. Dispositif de purification des gaz d'échappement selon l'une quelconque des revendications 11 à 12, **caractérisé en ce que**, grâce à la diminution de la teneur en oxygène pendant la désulfatation, on règle une valeur lambda comprise entre 0,95 et 1,0.

14. Dispositif de purification des gaz d'échappement selon l'une quelconque des revendications 11 à 13, **caractérisé en ce que** le catalyseur accumulateur de NOₓ (14) est chauffé à la température de désulfatation par des mesures amenuisant le rendement du moteur, en particulier par un allumage retardé.
